# EUROPEAN PATENT SPECIFICATION

(11) **EP 3 473 104 B1**
(45) Date of publication and mention of the grant of the patent: **17.06.2020**
(21) Application number: 18201382.1
(22) Date of filing: 19.10.2018
(51) Int. Cl.: A22B 3/00, B05B 7/00, B05B 7/08

(54) **A METHOD OF PERFORMING A PROCEDURE ON AN ANIMAL INVOLVING STUNNING AND/OR EUTHANIZING SAID ANIMAL**
VERFAHREN ZUR DURCHFÜHRUNG EINES VERFAHRENS AN EINEM TIER MIT BETÄUBUNG UND/ODER EINSCHLÄFERN DIESES TIERES
PROCÉDÉ DE RÉALISATION D'UNE PROCÉDURE SUR UN ANIMAL IMPLIQUANT L'ÉTOURDISSEMENT ET/OU L'EUTHANASIE DUDIT ANIMAL

(30) Priority: 19.10.2017 NL 2019765
(43) Date of publication of application: 24.04.2019
(73) Proprietor: Anoxia B.V., 3882 TN Putten (NL)
(72) Inventor: VAN MIL, Michiel Geert, 2515 XG Den Haag (NL); APPEL, Jeroen, 4532 KS Terneuzen (NL)
(74) Representative: Altenburg, Bernardus Stephanus Franciscus

(56) References cited:
- WO-A1-98/23331
- WO-A1-2014/194967
- WO-A1-2018/106115
- GB-A- 2 492 480
- KR-A- 20160 058 645
- KR-B1- 101 708 257
- KR-B1- 101 771 444

## Description

The present invention relates to a method of performing a procedure on an animal using a foam, said foam having a gas composition suitable for performing the procedure;
wherein the procedure is performed using a confined space; and
wherein the method comprises the steps of
- generating foam using a foam generator comprising
   - an inlet for the gas,
   - an inlet for an aqueous detergent solution,
   - a screen comprising a multitude of holes, and
   - a chamber comprising an outlet for the gas and an outlet for the aqueous detergent solution;
- introducing the foam in the confined space, and
- covering the animal with the foam.

A method according to the preamble is known in the art, for example from WO2007/021178, which relates to the sanitary slaughter (euthanasia) of animals, something that may be necessary to contain the spread of highly pathogenic diseases. This publication discloses a container, which provides the confined space, said container comprising a bottom, a roof and walls extending from the bottom to the roof. The roof comprises a lid having a hole allowing the passage of animals such as poultry. The container is provided with foam and chicken are introduced into the container and into the foam.

To reduce discomfort for the animals, it is known to prepare high expansion foam. A high expansion foam generator according to the state of the art, e.g. known from GB2492480, comprise a
- gas diffusor,
- an outlet for a liquid detergent composition
- a wire mesh for forming a pre-foam comprising relatively small bubbles,
- downstream of the wire mesh a bubble-forming plate for forming relatively large bubbles from the foam comprising relatively small bubbles

A problem with the method is that the foam generated (still) comprises a too large fraction of small bubbles, which may lead to asphyxiation, which is very undesirable from an animal welfare point of view. This foam has a relatively white appearance (low transparency) due to the presence of a relatively high volume fraction of small bubbles.

A further method for gas-based stunning of an animal with foam is disclosed in document WO 2018/106115 A1.

The objective of the present invention is to reduce the volume fraction of relatively small bubbles (those with a volume of < 0.5 ml; approximately equivalent to a spherical bubble having a diameter of 5 mm or less).

To this end, a method according to the preamble is characterized in that the procedure is chosen from
i) gas-based stunning, and
ii) gas-based euthanizing,
the foam generator used for generating the foam comprises
- as the screen a bubble-forming plate comprising a multitude of through-holes, said through-holes have a first cross-sectional diameter D1 between 1 and 15 mm and a second cross-sectional diameter D2 perpendicular to D1 between 1 and 15 mm,
- the ratio of open surface area Aₕ in m² of the perforated bubble-forming plate divided by the total surface area of the perforated bubble-forming plate comprising the through-holes is in the range of 0.1 - 0.3, and
- the outlet for the aqueous detergent composition comprising a full cone spray nozzle for directly spraying the aqueous detergent composition against the perforated bubble-forming plate;
wherein the step of generating the foam comprises
- spraying the aqueous detergent composition with a pressure drop over the nozzle of less than 2 Bar directly against the perforated bubble-forming plate at a rate Rd between 0.0003 - 0.0006 m³ per m² of surface area of the perforated bubble-forming plate per second, and
- supplying the gas to the perforated bubble-forming plate.

It has been found that by eliminating the pre-foam forming plate and by using a nozzle supplying the aqueous detergent composition under the conditions as specified, the volume fraction of relatively small bubbles can be reduced, resulting in a more transparent gas-liquid foam. The ratio has been found to result in transparent foam that is relatively stable.

According to a favourable embodiment, Rd is between 0.0004 and 0.00055 m³ per m² of surface area of the perforated bubble-forming plate per second.

This has been found to result in superior transparency.

According to a favourable embodiment, the step of generating the foam further comprises supplying the gas at a rate Rg between 0.1 and 0.2 m³ per m² of surface area of the perforated bubble-forming plate per second.

Thus a foam can be generated that is both transparent and stable.

The ratio of Rg / Rd in preferably in the range between 80 and 600.

According to a favourable embodiment, D1 and D2 are independently chosen from a range between 2 and 10 mm, preferably between 3 and 6 mm.

This results in foam having even better transparency.

According to a favourable embodiment, the pressure drop in the nozzle is between 0.5 and 1.25 Bar.

It has been found that a reduced pressure drop of the liquid detergent composition results in foam that is both relatively transparent and produced with an efficiency that allows for covering an animal quickly.

According to a favourable embodiment, the bubble-generating plate is a curved bubble-generating plate, and the nozzle sprays the aqueous detergent solution against the concave surface of said curved bubble-generating plate.

This has been found to result in relatively transparent foam. The term curved comprises one dimensionally curved plates but preferably two-dimensionally curved plates, such as a conical plate or a spherical segment; with the concave side being upstream. It is preferred that the nozzle is located near the radius of the curved bubble-generating plate, and preferably within 25% of the length of the radius to improve even application of aqueous detergent solution.

According to a favourable embodiment, the ratio of the surface area of the through-holes and the total surface area of the bubble-generating plate is in a range between 0.2 and 0.8, preferably between 0.4 and 0.6.

This allows for a more reliable operation of the bubble-generator, in particular at start-up.

The invention will now be illustrated with reference to the example section below, and with reference to the drawing wherein
Fig. 1A to Fig. 1E show various views of a foam generator used in experiments; and
Fig. 2 shows a section of a bubble-forming plate.

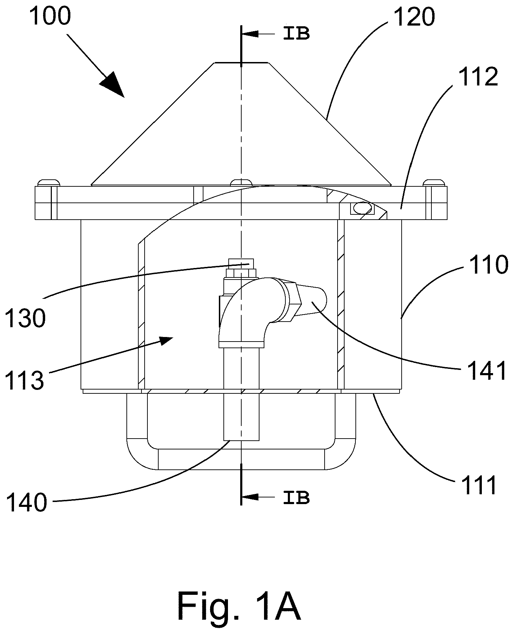

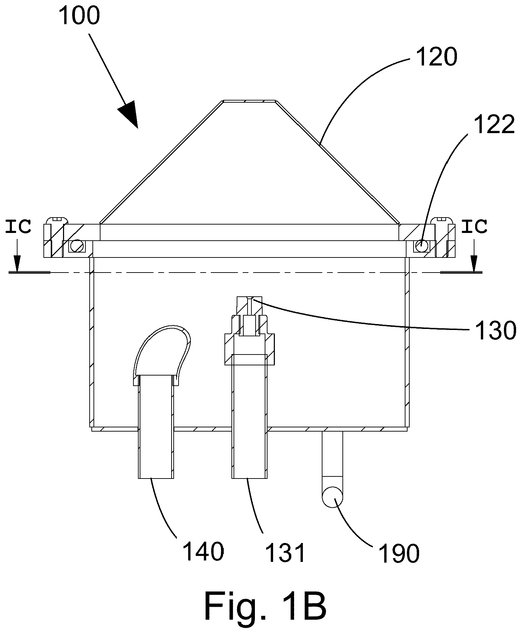

Fig. 1A to Fig. 1E show various views of a foam generator 100 used in experiments (cut-out view, cross-sectional view along line IB-IB of Fig. 1A, a cross-sectional view along line IC-IC of Fig. 1B, and perspective views (top and bottom) respectively).

The foam generator 100 comprises a cylindrical main body 110 (diameter 15 cm; height 9 cm) having a first end 111 and a second end 112 and defining a chamber 113, providing a confined space that is substantially closed for gas and/or foam. The second end 112 is provided with a perforated cone 120 (height 7 cm) having a plurality of round through-holes 121 (only one shown; diameter 5 mm; in a diagonal pattern, pitch (center to center of two adjacent holes) 6 mm). The ratio of the surface area of the through-holes and the total surface area of the bubble-generating plate is 0.46). The cone 120 is mounted using flanges and sealed using an O-ring 122.

Inside the main body 110 a full cone jet spray nozzle 130 (S3B1FN3.0-110; from Hypro EU) with a nominal spray angle of 110° is provided, the outlet of the nozzle 130 facing the cone 120. At the first end 111 there is a detergent inlet 131 for liquid detergent solution in communication with the nozzle 130. When operated at a relatively low pressure (such as 1 Bar instead of 3 Bar necessary for achieving the 110° angle), the droplets of the aqueous detergent solution are relatively big (and slow).

At the first end 111 there is also a gas inlet 140 and a gas outlet 141 inside the main body 110. The gas outlet 141 opens up tangential to the center line of the main body 110.

In this embodiment the foam generator 100 is also provided with a handle 190, and the foam generator 100 will in general be mounted pointing with the cone 120 downward.

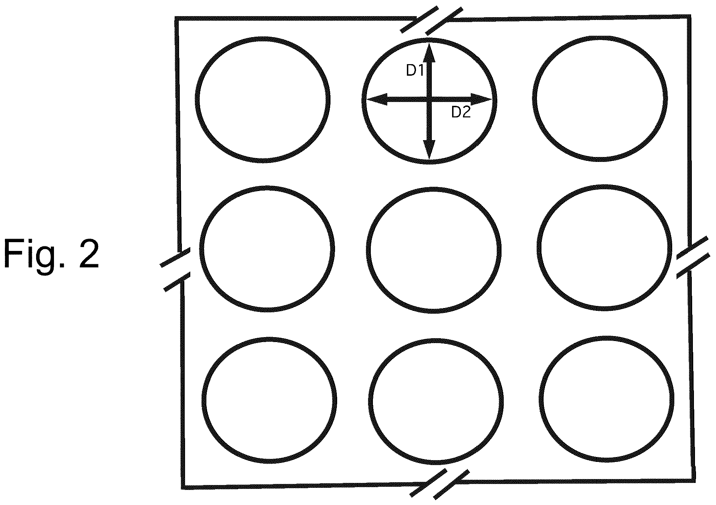

Fig. 2 shows a section of a bubble-forming plate 120, with 9 through-holes 121 visible. A through-hole 121 has a first cross-sectional diameter D1 and a second cross-sectional diameter D2 perpendicular to D1.

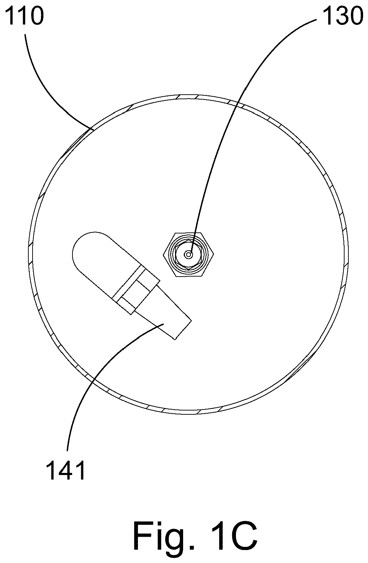

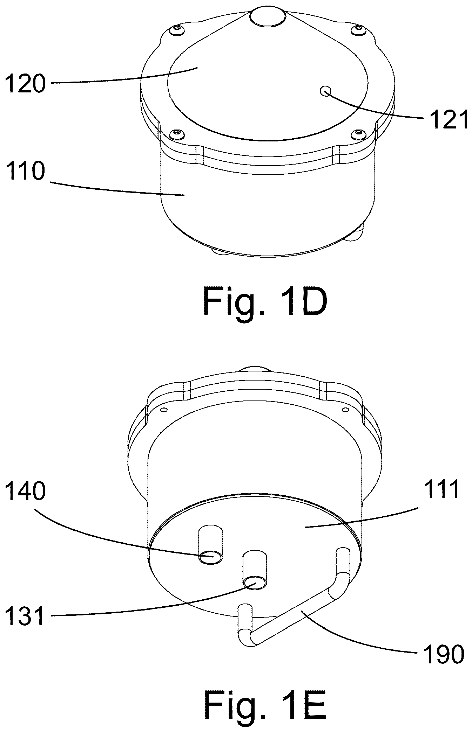

Foam was generated by providing the foam generator of Fig. 1 with
- Gas: High pressure cylinder Nitrogen 3.0 (99.9%)
- Foam agent: a 3% (vol./vol.) in water solution of HTF-1000 (Sthamer, Hamburg, Germany);
at various flow rates.

### Bubble size measurements:

The bubble size of foam generated was measured using an instrument provided by Teclis Instruments comprising a prism. A picture is of foam in contact with the base of the prism, making use of total internal reflection to provide a high contrast ratio between areas in contact with foam and areas in contact with air.

The two dimensional picture is analysed using Teclis Cell Size software to determine bubble size and size distribution.

The r95 was determined, which is the average radius of the largest bubbles occupying 95% of the two dimensional picture.

### Foam transparency measurements

The transparency of the foam was determined visually using a ruler containing an alternating series of black and white squares, each squares being 5 cm x 5 cm. The transparency is determined with the ruler in the foam, inspecting it in a direction substantially parallel to the ruler. By counting the number of black and white elements present in the foam the transparency of the foam can be determined. Relatively white foam is less transparent, so a lower number of squares can be seen. A relative value of 1.0 corresponded to 40 cm.

### Foam production efficiency

When producing foam, gas may break through the foam and is lost to the atmosphere. The foam production efficiency can be determined by dividing the time needed to fill a container of a given volumen (e.g. 500 liter) by the amount of gas used to produce the foam (taken at atmospheric pressure).

Typical results are summarised in the tables below. Rd and Rg are expressed in m³ per m² per second. P is a fraction of total area of through-holes divided by the total area comprising through-holes. The pressure drop over the nozzle was 1 Bar.

**Table 1**

| Bubble size (r95) as a function of Rd and Rg | | | | |
|---|---|---|---|---|
| | **Rg** | | | |
| **Rd** | 6.3E-02 | 1.3E-01 | 1.9E-01 | 2.5E-01 |
| 3.2E-04 | - | 14.1 | 16.4 | 14.6 |
| 4.0E-04 | - | 16.0 | 14.1 | 16.0 |
| 4.8E-04 | 15.0 | 16.2 | 12.7 | 10.9 |
| 5.6E-04 | 14.6 | 15.0 | 13.7 | 11.0 |
| 6.3E-04 | 13.7 | 11.5 | 11.1 | 9.4 |
| 7.1E-04 | 13.8 | 9.6 | 10.6 | 9.9 |
| 7.9E-04 | 13.4 | 9.9 | 10.1 | 10.9 |

**Table 2**

| Relative transparency (T) as a function of Rd and Rg | | | | |
|---|---|---|---|---|
| | **Rg** | | | |
| **Rd** | 6.3E-02 | 1.3E-01 | 1.9E-01 | 2.5E-01 |
| 3.2E-04 | - | 1.0 | 0.9 | 0.7 |
| 4.0E-04 | - | 0.9 | 1.0 | 0.9 |
| 4.8E-04 | 0.9 | 1.0 | 0.7 | 0.9 |
| 5.6E-04 | 0.7 | 1.0 | 0.6 | 1.0 |
| 6.3E-04 | 0.6 | 0.6 | 0.7 | 0.6 |
| 7.1E-04 | 0.6 | 0.4 | 0.6 | 0.4 |
| 7.9E-04 | 0.6 | 0.4 | 0.4 | 0.4 |

**Table 3**

| Bubble size (r95) as a function of Rd, Rg and permeability (P) | | | | |
|---|---|---|---|---|
| | | | P | |
| Rd | Rg | 0.26 | 0.31 | 0.37 |
| 4.0E-04 | 1.3E-01 | 16.0 | 20.4 | 24.0 |
| 4.8E-04 | 1.3E-01 | 16.2 | 20.4 | 28.8 |
| 4.0E-04 | 1.9E-01 | 14.1 | 20.4 | 27.5 |
| 4.8E-04 | 1.9E-01 | 12.7 | 20.2 | 28.7 |

## Claims

1. A method of performing a procedure on an animal using a foam, said foam having a gas composition suitable for performing the procedure; wherein the procedure is performed using a confined space; and wherein the method comprises the steps of
- generating foam using a foam generator (100) comprising
- an inlet for the gas,
- an inlet for an aqueous detergent solution,
- a screen comprising a multitude of holes, and
- a chamber comprising an outlet (141) for the gas and an outlet for the aqueous detergent solution;
- introducing the foam in the confined space, and
- covering the animal with the foam;
**characterized in that** the procedure is chosen from
i) gas-based stunning, and
ii) gas-based euthanizing,
the foam generator (100) used for generating the foam comprises
- as screen a bubble-forming plate comprising a multitude of through-holes (121), said through-holes (121) have a first cross-sectional diameter D1 between 1 and 15 mm and a second cross-sectional diameter D2 perpendicular to D1 between 1 and 15 mm,
- the ratio of open surface area Aₕ in m² of the perforated bubble-forming plate divided by the total surface area of the perforated bubble-forming plate comprising the through-holes is in the range of 0.1 - 0.3, and
- the outlet for the aqueous detergent composition comprising a full cone (120) spray nozzle (130) for directly spraying the aqueous detergent composition against the perforated bubble-forming plate;
wherein the step of generating the foam comprises
- spraying the aqueous detergent composition with a pressure drop over the nozzle (130) of less than 2 Bar directly against the perforated bubble-forming plate at a rate Rd between 0.0003 - 0.0006 m³ per m² of surface area of the perforated bubble-forming plate per second, and
- supplying the gas to the perforated bubble-forming plate.

2. The method according to claim 1, wherein Rd is between 0.0004 and 0.00055 m³ per m² of surface area of the perforated bubble-forming plate per second.

3. The method according to claim 1 or 2, wherein the step of generating the foam further comprises supplying the gas at a rate Rg between 0.1 and 0.2 m³ per m² of surface area of the perforated bubble-forming plate per second.

4. The method according to any of the preceding claims, wherein D1 and D2 are independently chosen from a range between 2 and 10 mm, preferably between 3 and 6 mm.

5. The method according to any of the preceding claims, wherein the pressure drop in the nozzle (130) is between 0.5 and 1.25 Bar.

6. The method according to any of the preceding claims, wherein the bubble-generating plate is a curved bubble-generating plate, and the nozzle (130) sprays the aqueous detergent solution against the concave surface of said curved bubble-generating plate.

7. The method according to any of the preceding claims, wherein the ratio of the surface area of the through-holes (121) and the total surface area of the bubble-generating plate is in a range between 0.2 and 0.8, preferably between 0.4 and 0.6.

## Patentansprüche

1. Verfahren zur Durchführung eines Verfahrens an einem Tier unter Verwendung eines Schaums, wobei der Schaum eine zur Durchführung des Verfahrens geeignete Gaszusammensetzung aufweist;
wobei das Verfahren unter Verwendung eines begrenzten Raums durchgeführt wird; und
wobei das Verfahren die Schritte umfasst von:
- Erzeugen von Schaum unter Verwendung eines Schaumgenerators (100), umfassend
- einen Einlass für das Gas,
- einen Einlass für eine wässrige Reinigungsmittellösung,
- ein Sieb, das eine Vielzahl von Löchern umfasst, und
- eine Kammer, die einen Auslass (141) für das Gas und einen Auslass für die wässrige Reinigungsmittellösung umfasst;
- Einleiten des Schaums in den begrenzten Raum, und
- Bedecken des Tieres mit dem Schaum;
**dadurch gekennzeichnet, dass** das Verfahren ausgewählt ist aus
i) gasbasierter Betäubung, und
ii) gasbasierter Einschläferung,
wobei der zur Erzeugung des Schaums verwendete Schaumgenerator (100) umfasst
- als Sieb eine blasenbildende Platte, die eine Vielzahl von Durchgangslöchern (121) umfasst, wobei die Durchgangslöcher (121) einen ersten Querschnittsdurchmesser D1 zwischen 1 und 15 mm und einen zweiten Querschnittsdurchmesser D2 senkrecht zu D1 zwischen 1 und 15 mm aufweisen,
- wobei das Verhältnis der offenen Oberfläche Aₕ in m² der perforierten blasenbildenden Platte geteilt durch die Gesamtoberfläche der perforierten blasenbildenden Platte, die die Durchgangslöcher umfasst, in dem Bereich von 0,1 - 0,3 liegt, und
- wobei der Auslass für die wässrige Reinigungsmittelzusammensetzung eine Vollkegel-(120)-Sprühdüse (130) zum direkten Sprühen der wässrigen Reinigungsmittelzusammensetzung gegen die perforierte blasenbildende Platte umfasst;
wobei der Schritt des Erzeugens des Schaums umfasst
- Sprühen der wässrigen Reinigungsmittelzusammensetzung mit einem Druckabfall über die Düse (130) von weniger als 2 Bar direkt gegen die perforierte blasenbildende Platte mit einer Rate Rd zwischen 0,0003 - 0,0006 m³ pro m² Oberfläche der perforierten blasenbildenden Platte pro Sekunde, und
- Liefern des Gases an die perforierte blasenbildende Platte.

2. Verfahren nach Anspruch 1, wobei Rd zwischen 0,0004 und 0,00055 m³ pro m² Oberfläche der perforierten blasenbildenden Platte pro Sekunde liegt.

3. Verfahren nach Anspruch 1 oder 2, wobei der Schritt des Erzeugens des Schaums weiter das Liefern des Gases mit einer Rate Rg zwischen 0,1 und 0,2 m³ pro m² Oberfläche der perforierten blasenbildenden Platte pro Sekunde umfasst.

4. Verfahren nach einem der vorstehenden Ansprüche, wobei D1 und D2 unabhängig aus einem Bereich zwischen 2 und 10 mm, vorzugsweise zwischen 3 und 6 mm, ausgewählt sind.

5. Verfahren nach einem der vorstehenden Ansprüche, wobei der Druckabfall in der Düse (130) zwischen 0,5 und 1,25 Bar liegt.

6. Verfahren nach einem der vorstehenden Ansprüche, wobei die blasenerzeugende Platte eine gekrümmte blasenbildende Platte ist und die Düse (130) die wässrige Reinigungsmittellösung gegen die konkave Fläche der gekrümmten blasenerzeugenden Platte sprüht.

7. Verfahren nach einem der vorstehenden Ansprüche, wobei das Verhältnis der Oberfläche der Durchgangslöcher (121) und der Gesamtoberfläche der blasenerzeugenden Platte in einem Bereich zwischen 0,2 und 0,8, vorzugsweise zwischen 0,4 und 0,6, liegt.

## Revendications

1. Procédé de réalisation d'une opération sur un animal en utilisant une mousse, ladite mousse possédant une composition de gaz appropriée pour la réalisation de l'opération ; dans lequel l'opération est réalisée en utilisant un espace confiné ; et dans lequel le procédé comprend les étapes consistant à :
- générer une mousse en utilisant un générateur de mousse (100) comprenant :
- une entrée pour le gaz ;
- une entrée pour une solution aqueuse de détergent ;
- un écran comprenant une multitude de trous ; et
- une chambre comprenant une sortie (141) pour le gaz et une sortie pour la solution aqueuse de détergent ;
- introduire la mousse dans l'espace confiné ; et
- recouvrir l'animal avec la mousse ;
**caractérisé en ce que** l'opération est choisie parmi :
i) un étourdissement basé sur un gaz ; et
ii) une euthanasie basée sur un gaz ;
le générateur de mousse (100) que l'on utilise pour la génération de la mousse comprend :
- à titre d'écran, une plaque de formation de bulles comprenant une multitude de trous de passage (121), lesdits trous de passage (121) possédant un premier diamètre D1 en section transversale entre 1 et 15 mm et un deuxième diamètre D2 en section transversale perpendiculaire à D1 entre 1 et 15 mm ;
- le rapport de l'aire de surface ouverte Aₕ en m² de la plaque perforée de formation de bulles divisée par l'aire de surface totale de la plaque perforée de formation de bulles comprenant les trous de passage se situe dans la plage de 0,1 à 0,3 ; et
- la sortie destinée à la composition aqueuse de détergent comprend une buse de pulvérisation (130) possédant une configuration en forme de cône plein (120), destinée à pulvériser de manière directe la composition aqueuse de détergent contre la plaque perforée de formation de bulles ;
dans lequel l'étape de génération de la mousse comprend le fait de :
- pulvériser la composition aqueuse de détergent avec une chute de pression sur l'étendue de la buse (130) inférieure à 2 bar de manière directe contre la plaque perforée de formation de bulles à un débit Rd entre 0,0003 et 0,0006 m³ par m² de l'aire de surface de la plaque perforée de formation de bulles par seconde ; et
- alimenter le gaz en direction de la plaque perforée de formation de bulles.

2. Procédé selon la revendication 1, dans lequel Rd se situe entre 0,0004 et 0,00055 m³ par m² de l'aire de surface de la plaque perforée de formation de bulles par seconde.

3. Procédé selon la revendication 1 ou 2, dans lequel l'étape consistant à générer la mousse comprend en outre le fait d'alimenter le gaz à un débit Rg entre 0,1 et 0,2 m³ par m² de l'aire de surface de la plaque perforée de formation de bulles par seconde.

4. Procédé selon l'une quelconque des revendications précédentes, dans lequel D1 et D2 sont choisis de manière indépendante dans une plage qui se situe entre 2 et 10 mm, de préférence entre 3 et 6 mm.

5. Procédé selon l'une quelconque des revendications précédentes, dans lequel la chute de pression dans la buse (130) se situe entre 0,5 et 1,25 bar.

6. Procédé selon l'une quelconque des revendications précédentes, dans lequel la plaque de génération de bulles représente une plaque de génération de bulles de forme courbe et la buse (130) pulvérise la solution aqueuse de détergent contre la surface concave de ladite plaque de génération de bulles de forme courbe.

7. Procédé selon l'une quelconque des revendications précédentes, dans lequel le rapport de l'aire de surface des trous de passage (121) et de l'aire de surface totale de la plaque de génération de bulles se situe dans une plage entre 0,2 et 0,8, de préférence entre 0,4 et 0,6.
